Europäisches Patentamt

European Patent Office

Office européen des brevets

(11) Publication number: **0 157 983**

**B1**

## EUROPEAN PATENT SPECIFICATION

(45) Date of publication of patent specification: **07.03.90**

(51) Int. Cl.⁵: **B 62 M 25/04**

(21) Application number: **84308002.9**

(22) Date of filing: **19.11.84**

(54) **Speed change operating device for a bicycle.**

(30) Priority: **03.04.84 JP 67162/84**
**03.04.84 JP 67163/84**
**25.07.84 JP 156222/84**

(43) Date of publication of application:
**16.10.85 Bulletin 85/42**

(45) Publication of the grant of the patent:
**07.03.90 Bulletin 90/10**

(84) Designated Contracting States:
**BE DE FR GB IT**

(56) References cited:
**EP-A-0 076 589**
**EP-A-0 084 242**
**EP-A-0 084 243**
**DE-A-3 200 562**
**FR-A-1 352 030**
**GB-A-2 025 003**
**US-A-4 232 564**

(73) Proprietor: **SHIMANO INDUSTRIAL COMPANY LIMITED**
**77, 3-cho Oimatsu-cho Sakai-shi**
**Osaka (JP)**

(72) Inventor: **Nagano, Masashi**
**74-19, Midorigaoka**
**Izumi-shi Osaka (JP)**

(74) Representative: **Szczuka, Jan Tymoteusz et al**
**Cruikshank & Fairweather 19 Royal Exchange Square**
**Glasgow G1 3AE Scotland (GB)**

## Description

This invention relates to a speed-change operating device for a cycle, and more particularly to a speed change operating device having a base member with a pivot shaft and mountable on the frame or handlebars, for example on the top tube, of the cycle, and control levers pivotally mounted on the pivot shaft for actuating a derailleur on the cycle.

In use of this kind of speed change operating device the control lever has to be moved to the correct position corresponding to a desired speed change stage of a derailleur. In the case where the speed-change operating device has a friction mechanism for applying to the lever a resistance against movement thereof under the influence of the biasing force of a return spring it is relatively difficult to turn the lever towards the proper position. As a result the lever tends to be over-shifted and the cyclist, as he becomes aware through his legs of engagement of the drive chain with the desired sprocket, has to move the lever back by an amount corresponding to the degree of over-shifting.

Such a mode of operation requires however, not only considerable skill on the part of the cyclist but also his mental concentration on the lever operation as well as additional time involved in operating the lever to move it back after the overshift. As a result the rider's concentration on steering the cycle is reduced thereby giving rise to loss of time which may be especially important in road races.

In order to overcome the above problem, a speed-change operating device has been proposed which is provided with a positioning mechanism comprising a positioning member having engagement portions corresponding to the respective speed change stages of the derailleur and an engaging member engageable with each engagement portion, so that the control lever is always moved to a position corresponding to a desired speed change stage.

With such a positioning mechanism the control lever is operated to switch the engaging member to a desired engagement portion so as to ensure engagement of the drive chain with the desired sprocket thereby reducing the overall lever operating time and enabling the cyclist to avoid unintentional overshifting of the lever and concentrate his attention on propulsion and steering of the cycle. The positioning mechanism, however, cannot be used as it is i.e. without adjustment when the combination of sprocket tooth numbers and intervals therebetween changes, because the control wire connecting the speed-change operating device to the derailleur has to be adjusted in its effective length to match the positions set by the positioning mechanism with the speed change stages of the derailleur and a similar adjustment is also required when the wire is elongated.

With an ordinary cycle, the position adjustment need only be carried out once. With a racing cycle though, the cycle wheel may require to be exchanged during a race. In the case where a multi-stage sprocket assembly is attached to the wheel to be changed and this wheel is exchanged, the speed change stages of the derailleur may not match up with the respective sprocket so that a position adjustment is required. This takes considerable time, resulting in a significant time delay for the racer, and because of this speed change operating devices having such a positioning mechanism have not been usable on racing cycles.

Another solution is proposed in US Patent No. 4,232,564 which relates to a bicycle speed-change lever device comprising a lever body pivotally mounted on a support shaft and having a handle portion and a base portion which is formed with internal hollow spaces, within which are disposed a step positioning mechanism including a resiliently urged engaging piece and a plurality of engaging recesses arranged so as to cooperate for retaining the lever body in a selected speed gear position, and a one-way clutch mechanism including means for permitting the lever body to pivotally move in one direction with reduced frictional resistance.

It is an object of the present invention to avoid or minimize one or more of the above disadvantages.

In particular it is an object of the present invention to provide a speed-change operating device which is provided with a friction mechanism, a position mechanism and an operating mechanism for selecting operation and non-operation of positioning of the control lever by a position member and an engaging member of the positioning mechanism, so that whilst the positioning mechanism is used to efficiently change the cycle speed, the friction mechanism is usable for changing speed when the positioning mechanism is not usable.

The present invention provides a speed-change operating device suitable for use with a cycle derailleur having a return spring, which device comprises a base member having a pivot shaft, a control lever mounted rotatably on said pivot shaft for actuating said derailleur, said speed change operating device having a friction mechanism for subjecting said lever to a rotational resistance against the biasing force of said derailleur return spring, a positioning mechanism for said lever, which mechanism is provided with a positioning member having a plurality of engagement portions for setting the speed change stages of said derailleur and an engaging member engagable with at least one of said engagement portions characterised in that said device further comprises an operating mechanism including engagement control means movable between a first mode in which there is operative engagement between said positioning member and said engaging member and a second mode in which the engagement is interrupted and becomes non-operative, said friction mechanism operating to maintain the control lever in a selected speed change position during disengagement of the positioning member in said second mode.

With a speed-change control device of the present invention the problem of adjustment of the positioning mechanism when required may be avoided by selective deactuation thereof as required and use of friction means instead, thereby maintaining optimum speed-change efficiency as far as practicable whilst also permitting proper gear changing even when adjustment would otherwise normally be required.

In addition it may be noted that although the positioning mechanism is controlled by the operating mechanism so as to be actuated or de-actuated as required the friction mechanism does not need to be specifically actuated or de-actuated. In other words, even when the friction mechanism is in its actuated condition, the positioning mechanism may also still be actuated.

In a first preferred form of the invention the operating mechanism is always used to select operation or non-operation of the positioning mechanism i.e. actuation or de-actuation thereof whilst the friction mechanism is adapted to be permanently actuated. In a second preferred form of the invention actuation of the positioning mechanism and friction mechanism is exclusively selective i.e. only that which is to be used is actuated at any given time.

In the first type of embodiment, the positioning mechanism is selected for operation or non-operation by means of the positioning member and engaging member of the positioning mechanism being adapted to engage or disengage one or other of the operating lever and base member, and by means of one of the positioning member and engaging member or a support member therefor being made displaceable towards engaging and disengaging positions with respect to the other so that displacement towards the latter position de-actuates the positioning mechanism. In the second embodiment, the positioning mechanism or the friction mechanism is generally selected with the aid of an adjustment screw member screw-threadedly engaging a pivot shaft to adjust the rotational resistance caused by the friction mechanism.

In either case, actuation of the positioning mechanism is selected by the operating mechanism, thereby changing the cycle speed simply, quickly and accurately by use of the positioning mechanism to provide good speed change efficiency. Also, in a case where a different sprocket assembly combination cannot function unless the control wire length is adjusted, the friction mechanism is still usable for changing the cycle speed, in particular when the present invention is applied to a road-racing cycle, whereby loss of time in adjusting the wire length may be avoided.

Further preferred features and advantages of the invention will appear from the following detailed description, given by way of example of some preferred embodiments illustrated with reference to the accompanying drawings in which:

Fig. 1 is a partly sectioned end elevation of a first speed change operating device of the invention;

Fig. 2 is a perspective exploded view of the principal part of the device of Fig. 1;

Fig. 3 is a side elevation of an operating mechanism of the device of Fig. 1;

Fig. 4 is a perspective view of a clutch member of the device of Fig. 1;

Fig. 5 is a view corresponding to Fig. 1 of a second embodiment of the invention;

Fig. 6 is a perspective exploded view of the principal part of the second embodiment;

Fig. 7 is a detail sectional view of a third embodiment of the invention;

Fig. 8 is a view corresponding to Fig. 1 of a fourth embodiment of the invention;

Fig. 9 is a perspective exploded view of principal part of the fourth embodiment;

Fig. 10 is a view corresponding to Fig. 1 of a fifth embodiment of the invention;

Fig. 11 is a perspective exploded view of the principal part of the fifth embodiment;

Fig. 12 is a sectional view of the principal part only of a sixth embodiment of the invention on an enlarged scale;

Fig. 13 is a perspective exploded view of the principal part of the sixth embodiment;

Fig. 14 is a perspective view showing the relation between a cap and an adjustment screw in the sixth embodiment;

Fig. 15 is a sectional view on an enlarged scale of the principal part of a seventh embodiment;

Fig. 16 is a sectional exploded view of the seventh embodiment;

Fig. 17 is a perspective view of the operating member and cam body of the seventh embodiment;

Fig. 18 is an illustration of the engagement relation between the operating member and cam body of Fig. 17;

Fig. 19 is a partial plan view of the operating member and cam body of Fig. 17;

Fig. 20 is a perspective view of a fixing screw member and handle of the seventh embodiment;

Fig. 21 is a partly sectioned elevation illustrating the relation between the fixing screw member and handle of Fig. 17;

Fig. 22 is a partly sectioned view of the positioning member of the seventh embodiment;

Fig. 23 is a bottom view of the positioning member of Fig 22;

Fig. 24 is a partly sectioned view of the engaging member of the seventh embodiment;

Fig. 25 is a plan view of the engaging member of Fig. 24; and

Figs. 26 and 27 are detail sectional views illustrating further modified embodiments of the invention.

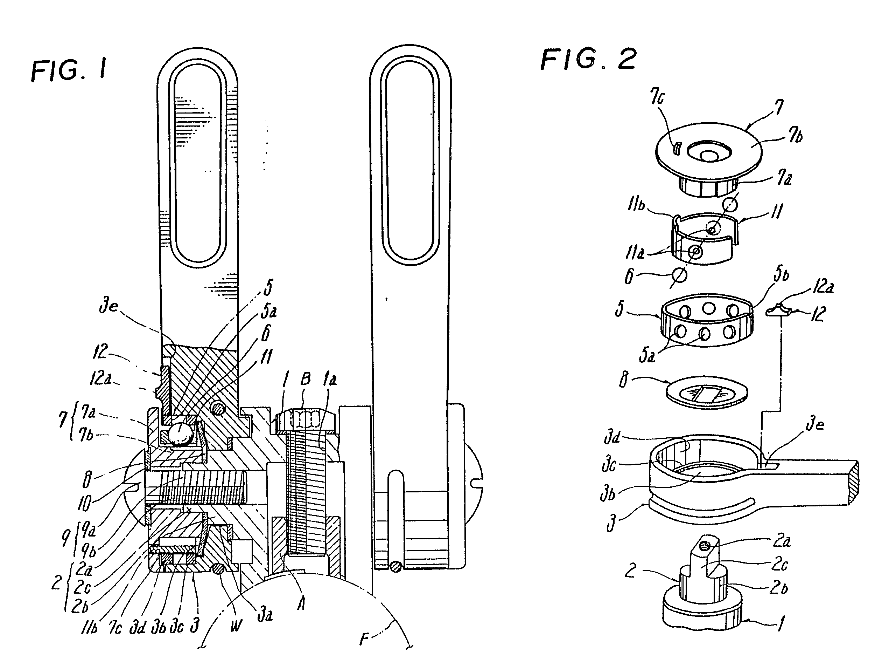

A speed change operating device shown in Fig. 1 is of double lever type, with a control lever 3 rotatably mounted on a pivot shaft 2 on a base member 1 which is, in turn fixed to, for example the top tube of a cycle frame *F*, the control lever 3 at the left-hand side as viewed in Fig. 1 being operable to actuate a rear derailleur (not shown) through a control wire *W*.

The speed change operating device of the invention basically comprises; a friction mechanism formed and arranged for applying to the operating lever 3 a rotational resistance against the biasing force of a return spring of the rear derailleur and so that its rotational resistance is adjustable; a positioning mechanism for the control lever 3, which mechanism comprises a positioning member 5 having a plurality of engagement portions 5*a* for setting the respective speed change stages of the rear derailleur and an engaging member 6 engageable with at least one of the engagement portions 5*a*; and an operating mechanism which selects operation or non-operation, for positioning of the control lever 3 by means of the positioning member 5 and engaging member 6 i.e. actuates or de-actuates the positioning mechanism.

Referring to Figs. 1 to 4 in more detail, the first embodiment of the speed change operating device of the invention has its base member 1 provided at its centre with a mounting bore 1*a*, and at one lateral side with the pivot shaft 2 which is tubular and has at its centre a threaded bore 2*a* projecting perpendicularly to the axis of the mounting bore 1*a*, the base member 1 being fixed to the cycle frame *F* by a fixing means comprising a mounting screw *B* screw-threadedly engagable with the mounting bore 1*a* and a base *A* welded to the frame *F* and provided with a threaded bore. Alternatively, the base member 1 could be fixed to the frame *F* by means of a clamping band or the like.

A generally circular section shaft portion 2*b* and a non-circular shaft portion 2*c* are provided at the outer periphery of the pivot shaft 2, the circular shaft portion 2*b* rotatably mounting the control lever 3, whilst the non-circular shaft portion 2*c* non-rotatably mounts a cap 7 comprising a cylinder 7*a* with a flange 7*b* at one axial end thereof. Alternatively, the pivot shaft 2 could be formed separately from the base member 1 and mounted non-rotatably with respect thereto.

The control lever 3 has a boss, is rotatably mounted via a pivot shaft bore 3*a* at the centre of said boss on the circular shaft portion 2*b*, and a circular recess 3*d* is provided in one face of the boss with, at its axially inward end, a receiving surface 3*b* which extends radially outwardly from one end of the pivot shaftbore 3*a* and with an annular recess portion 3*d* spaced from the receiving surface 3*b* by a shoulder 3*c*. The positioning mechanism is interposed radially between the recess 3*d* and the cylinder 7*b* of the cap 7, and the friction mechanism between the end face of the cylinder 7*b* and the receiving surface 3*b*.

The friction mechanism has a friction plate 8 with a frictional portion matching in size the receiving surface 3*b* of the control lever 3, and which is fitted non-rotatably but axially displacably on the non-circular shaft portion 2*c* of the pivot shaft 2. An adjustment screw bolt 9 comprising a head 9*a* in contact with the external end face of cap 7 to subject it to an axial pressure and a threaded shank 9*b* axially movably screwable with the threaded bore 2*a* of the pivot shaft 2, screw-threadedly engages the bore 2*a* to apply an adjustable force to the friction plate 8 through the cap 7 and a washer 10 betwee the head 9*a* and cap 7, thereby to apply in turn to the receiving surface 3*b* of the control lever 3 a rotational resistance to rotation of the lever 3 by the biasing force exerted by the return spring of the derailleur by pressing the lever 3 against the base member 1 with an adjustable pressure and hence an adjustable rotational resistance.

The positioning mechanism employs spherical engaging members 6 and a support member 11 for holding the engaging members 6 and biasing them against the engagement portions 5*a* of the positioning member 5. The positioning member 5, as shown in Fig. 2, is tubular, mounted in the recess 3*d* of the control lever 3 and disposed on the shoulder 3*c* thereof so as to be rotatable relative to the inner surface of the pivot shaft bore 3*a*, and provided at one end with a notch 5*b* opposite the operating mechanism and to either side, circumferentially of the notch 5*b*, with engagement bores 5*a* corresponding to respective speed change stages of the derailleur.

The support member 11 for the engaging members 6 is formed in a circular arc and has at an intermediate portion thereof an axially extending retainer lug 11*b* for engagement in slot 7*c* formed in the flange 7*b* of the cap 7 and, at both circumferential sides of the retainer lug 11*b*, a pair of engagement portions 11*a* for holding and biasing the engaging members 6 radially outwardly.

In the positioning mechanism, the support member 11 holding the engaging members 6 in the respective engagement portions 11*a* is reduced in diameter and inserted into the positioning member 5 so that when the positioning member 5 rotates relative to the holding member 11, the engaging members 6 successively engage the engaging portions 5*a*. When the positioning member 5 and the support member 11 assembled together therewith, are inserted into the recess 3*d* and disposed on the shoulder 3*c*, the notch 5*b* is disposed at the lever grip side and the retainer lug 11*b* of the support member 11 is retained in the retaining bore 7*c* of the cap 7, thereby securing the holding member 11 against rotation relative to the base member 1.

The operating mechanism for selecting operation and non-operation of the positioning mechanism mounted in the recess 3*d*, as shown in Figs. 1, 3 and 4, comprises a guide groove 3*e* formed in one end face of the control lever boss and extending radially outwardly towards the distal end of the control lever, a clutch member 12 disposed in the guide groove 3*e* so as to be engagable with or disengagable from the notch 5b of the positioning member 5, with a nose 12a projecting axially outwardly of said guide groove 3e, so that the said nose 12a is operable to allow the positioning member 5 to engage or disengage the control lever 3.

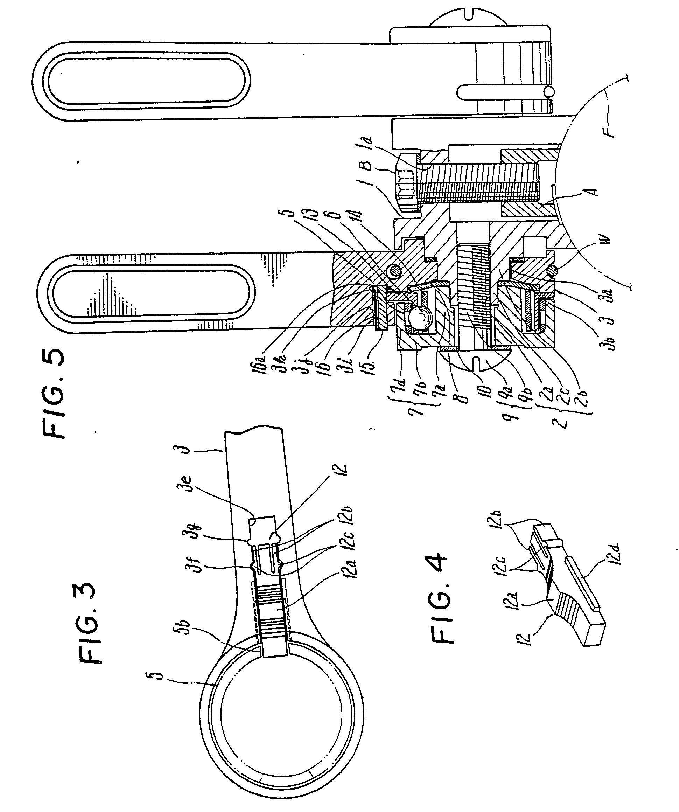

The guide groove 3e, as shown in Figs. 3 and 4, is provided at its opposed side walls with regularly spaced recesses 3f and 3g. The clutch member 12 is provided at both sides of one lengthwise end directed towards the distal end of lever 3, with resiliently deformable segments 12b which have at their outsides outwardly projecting ribs 12c and are biased to engage with respective ones of said recesses 3f or 3g thereby being held in the engaging or disengaging position with respect to said notch 5b.

Also, the guide groove 3e has on both sides and at the lowermost portions thereof recesses extending lengthwise of the groove 3e and the clutch member 12 has at the both sides and the lowermost portions thereof elongate ribs 12d projecting outwardly and extending lengthwise of the clutch member 12 and engagable with said recesses in the guide groove 3e, thereby forming a holding means for preventing the clutch member 12 from escaping from the groove 3e.

In the abovementioned construction, the friction mechanism and positioning mechanism are independently operable for actuation or deactuation. In more detail, the adjustment screw bolt 9 is rotated to switch the friction mechanism to its operating position for applying an adjustable rotational resistance to the control lever 3 against the biasing force of the return spring of the derailleur and to its non-operating condition for applying no rotational resistance. The clutch member 12 is movable along the groove 3e to engage or disengage the notch 5b of the positioning member 5, whereby the control lever 3 can be switched between its operating condition for setting the speed change stage of the derailleur and its non-operating condition.

Thus, when only the friction mechanism is actuated, the control lever 3 overshoots the position corresponding to the desired speed change stage to a greater or lesser extent and is then returned to said position for switching of the derailleur.

When only the positioning mechanism for the control lever 3 is actuated, the operating lever 3 is always movable to the desired speed change position accurately and reliably so that overshifting is avoided. Hence, even an unskilled cyclist can complete the speed change simply, quickly and easily without the need for any special attention thereto.

In the case of the use of a speed change operating device of the invention of the abovedescribed form on a roadrace cycle, the positioning mechanism is actuated preferentially to change the cycle speed simply and quickly. When the wheel is exchanged during racing so that the multistage sprocket assembly gear combination is changed and no longer matches the positioning mechanism with the respective speed change stages of the rear derailleur, the clutch member 12 is operated to move the positioning mechanism to its non-operating position without the need for any adjustment of the speed change positions. The adjustment screw bolt 9 having previously been adjusted so as to apply a suitable predetermined rotational resistance to the control lever 3, when the positioning mechanism is de-actuated, the friction mechanism is immediately usable without the need for operating the adjusting screw bolt 9. Hence, the use of the friction mechanism allows the cyclist to continue racing without the need for any troublesome adjustment of the speed change positions.

In addition, the friction mechanism may be actuated even when the positioning mechanism is also in its operating condition. In this case, the positioning mechanism further ensures proper operation. Even when the positioning mechanism is de-actuated, there is no need to operate the adjustment screw bolt 9 to actuate the friction mechanism. Especially, when the positioning mechanism is de-actuated because of wheel changes during road racing, the adjustment screw bolt 9 need not be used for the friction mechanism adjustment.

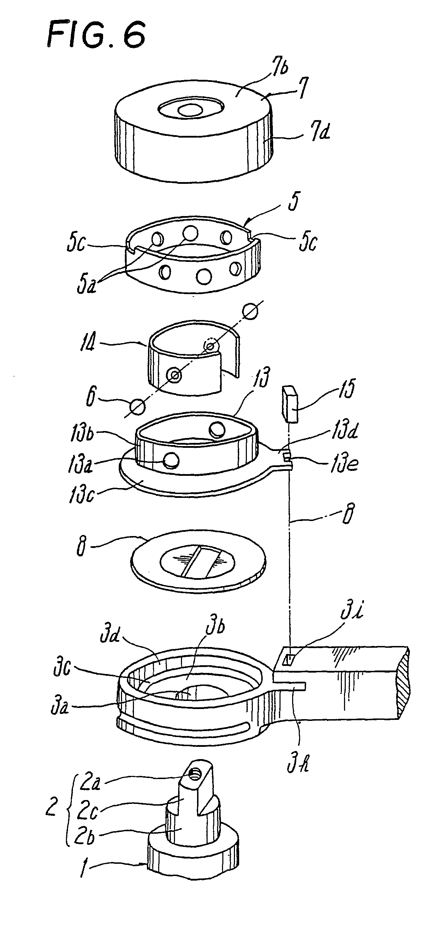

Figs. 5 and 6 show a second embodiment which differs from the first embodiment in that the engaging members 6 are selectively rotatable together with the control lever 3 or independently thereof, corresponding to actuation or de-actuation of the positioning mechanism by means of a clutch member. Specifically the flange 7b of the cap 7 of the first embodiment is provided with an outer annular portion 7d larger in diameter than the central cylinder 7a, the tubular positioning member 5 being fixed to the inner surface of the outer cylinder 7d, and a holding member 13 for holding the engaging members 6 is interposed between the outer annular portion 7d and the inner cylinder 7a, so that the holding member 13 is adapted to engage or disengage the control lever 3.

In addition, the positioning member 5, as shown in Fig. 6 is provided with two diametrically opposed notches 5c, which engage projections (not shown) provided on the outer annular cap portion 7d, thereby securing the positioning member 5 to the outer cylinder 7d.

The holding member 13, as shown in Fig. 6, uses a split tubular spring element 14 for biasing the engaging members 6 toward the positioning member 5, and comprises a tubular portion 13b having engagement bores 13a for receiving therein the engaging members 6 respectively, a flange 13c, and an engaging nose 13d projecting radially outwardly from the flange 13c, the flange 13c being interposed and supported between the axial end face of the outer annular portion 7d and the outer surface of the boss of the lever 3, the engaging nose 13d being disposed in a radially outwardly extending recess 3h formed in the lever 3, so that an engagement notch 13e provided in the engaging nose 13d, a guide slot 3i connecting with the recess 3h, and a clutch member 15 swingably mounted in the guide slot 3*i*, together constitute the operating mechanism.

The clutch member 15 is basically similar in operation to the clutch member 12 in the first embodiment, but differs therefrom in its direction of movement. Referring again to Fig. 5, a leaf spring 16 having at its distal end a projection 16*a* is disposed lengthwise of the clutch member 15 and at one wall surface of the guide slot 3*i* are provided recesses 3*j* and 3*k* each engagable with the projection 16*a* when the clutch member 15 engages or disengage the notch 13*e*, thereby holding the clutch member 15 in the bore 3*i*.

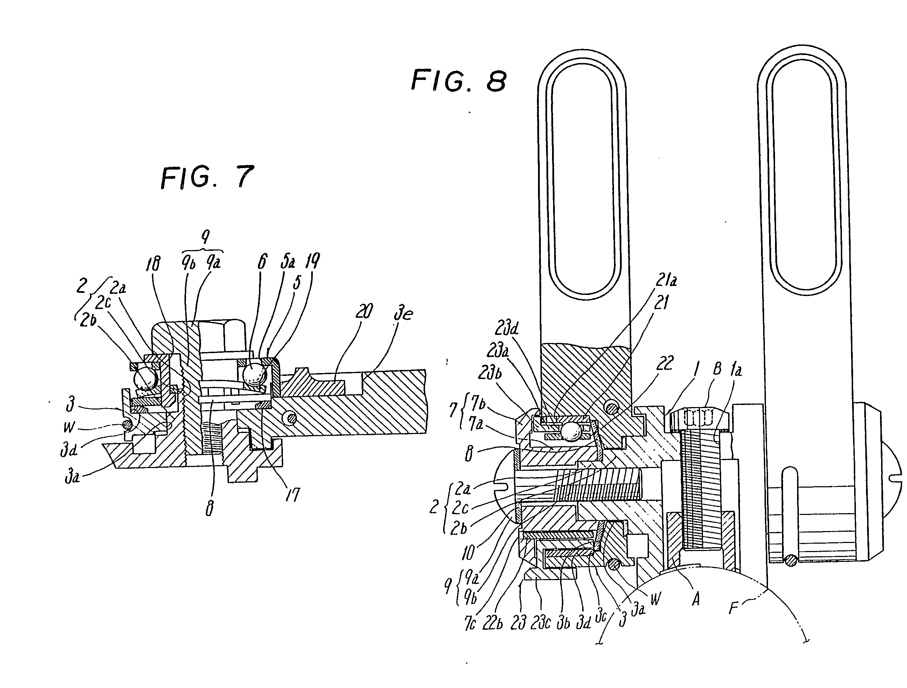

Fig. 7 shows a third embodiment which similarly to the first embodiment, is adapted to allow a clutch member 20 to engage or disengage the positioning member 5, but differs therefrom in that the engaging members 6 engage or disengage the positioning member by movement axially rather than radially of the operating lever 3. In Fig. 7, generally like parts corresponding to those of the first embodiment are identified by like reference numerals.

In more detail, at one side of the boss of the control lever 3 is provided a round recess 3*d* in continuation of the pivot bore 3*a*, a friction plate 8 is mounted in the recess 3*d* on a washer 17, a mounting cylinder 18 used instead of the cap is disposed around the threaded shank 9*b* of the screw bolt 9, and a positioning member 5 and a holding member 19 comprising a spring plate for holding the engaging members 6, are disposed around the mounting cylinder 18 and between the head 9*a* of the screw bolt 9 and the friction plate 8, so that the holding member 19 and engaging members 6 held thereto can be assembled as a unit on the mounting cylinder 18 with respect to the positioning member 5.

The positioning member 5 provides an engaging segment 5*d* extending towards the control lever 3, and a guide recess 3*e* similar to that in the first embodiment is provided on the lever 3, so that a clutch member 20 is movably supported in the guide slot 3*e*.

Alternatively, the positioning member 5 or the engaging members 6, may be made radially or axially displaceable by means of an operating member.

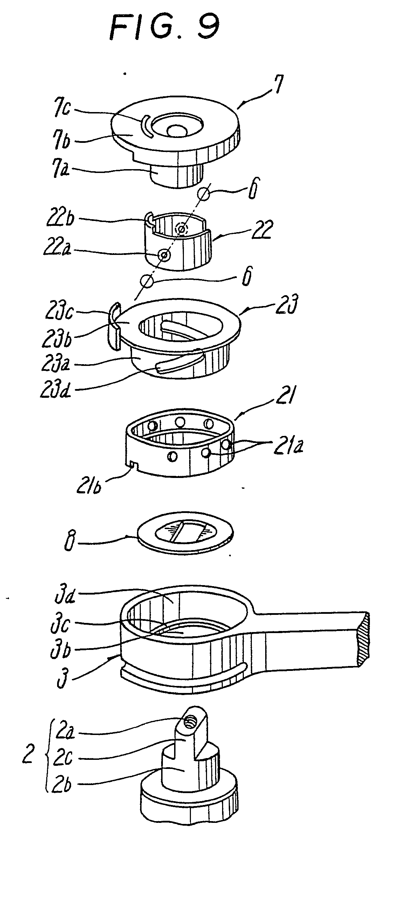

Figs. 8 and 9 show a fourth embodiment which is basically similar to the first embodiment. A tubular positioning member 21 has a plurality of engagement portions 21*a* and is mounted in a round recess 3*d* in the boss of the control lever 3 so as to be non-rotatable relative to the recess 3*d*, a cylindrical holding member 22 having holding portions 22*a* for the engaging members 6 is fitted into the positioning member 21 and fixed to the cap 7, and an operating member 23 is interposed between the positioning member 21 and the holding member 22.

The operating member 23, as shown in Fig. 9, comprises a cylinder 23*a* interposed rotatably between the holding member 22 and the positioning member 21, a flange 23*b* formed at one axial end of the cylinder 23*a* and interposed rotatably

movably but axially immovably between the flange 7*b* of the cap 7 and the surface of the boss of the control lever 3 opposite thereto, and an operating segment 23*c* mounted at one side of the flange 23*b*. The cylinder 23*a* is provided with control bores 23*d* extending circumferentially and slanting axially of the operating members 23, so that the operating member 23 rotates to switch the engaging members 6 to the engaging or disengaging position with respect to the positioning member 21 by means of the bores 23*d*.

The positioning member 21 is provided with a notch 21*b*, with which an engaging projection (not shown) on the lever 3 engages for securing to the lever 3. The holding member 22 is provided with a nose 22*b*, which is fitted into a bore 7*c* of the cap 7 for securing to the cap 7.

In the abovementioned construction, the adjusting screw bolt 9 is turned to push the friction plate 8 against the control lever so that the friction mechanism can be switched between a state where the control lever 3 is subjected to an adjusted rotational resistance against the biasing force of the return spring of the derailleur and a state where the lever 3 is not subjected to any rotational resistance. The segment 23*c* of the operating mechanism 23 is operated to shift through the control bores 23*d* the engaging members 6 from their engaging positions with the positioning member 22 to positions of disengagement therefrom, thereby enabling the control lever 3 to be switched from the actuated condition for positioning of the rear derailleur in the respective speed change stages to the de-actuated position.

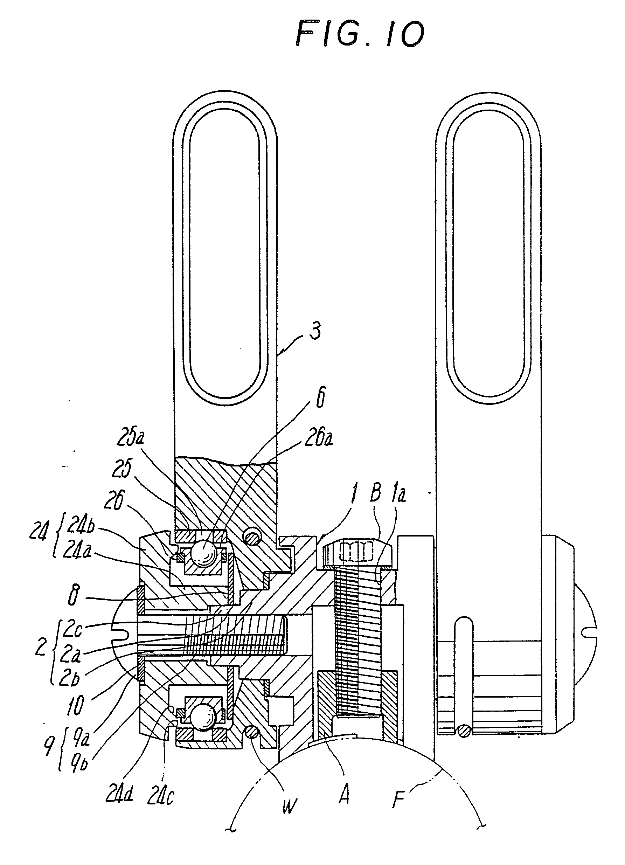

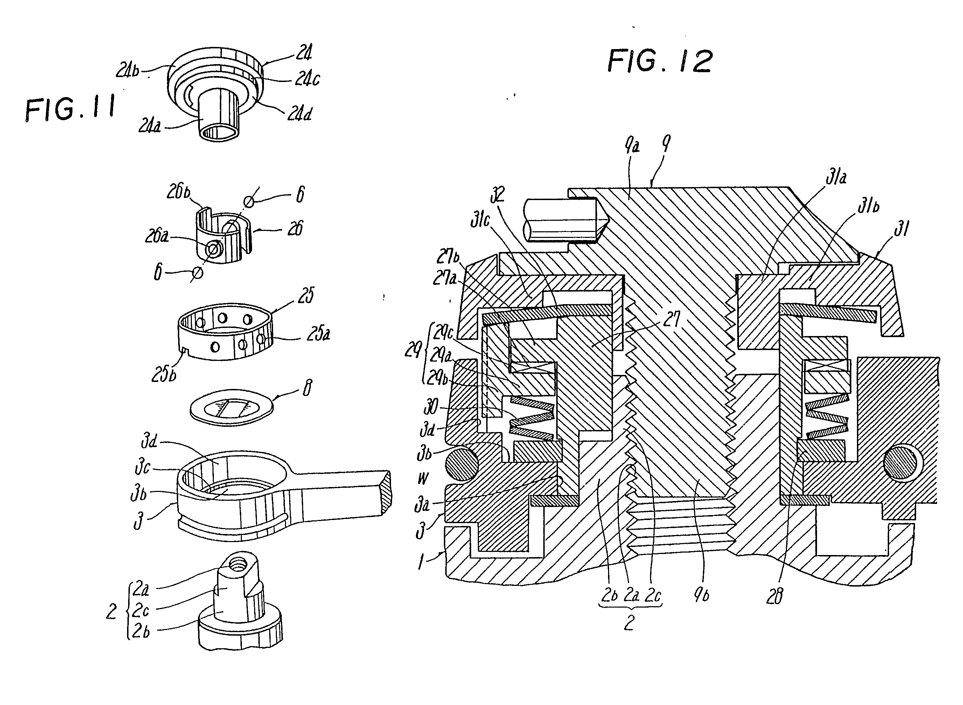

The friction mechanism and positioning mechanism in the first to fourth embodiments may also be selected in an alternative way as may be seen from the fifth embodiment shown in Figs. 10 and 11.

The fifth embodiment is basically similar in construction to the fourth embodiment, but differs in that the operating member 24*c* is formed integrally with the cap 24, the adjustment screw bolt 9 screws forwardly to move the cap 24 axially of the pivot shaft 2 and shift a holding member 26 for the engaging members 6, and the cap 24 presses the friction plate 8 against the boss of the control lever 3, thereby actuating the friction mechanism.

The cap 24, has as in the previously described embodiments, a cylinder 24*a* and a flange or lid 24*b*, whilst the operating member 24*c* is formed integrally therewith.

The positioning mechanism comprises a tubular positioning member 25 disposable in the recess 3*d* of the control lever 3 so as to be non-rotatable relative thereto, the holding member 26 comprising a generally 'C'-shaped section resiliently deformable member, and the engaging members 6 being held into holding recesses 26*a* in the holding member 26 the holding member 26 being fixed to the cap 24 so as to be resiliently displacable relative thereto.

Incidentally, the positioning member 25 is secured to the control lever 3 by means of engagement of a notch 25b therein with a projection (not shown) on the control lever 3, and the holding member 26 is secured to the cap 24 through engagement of a retainer 26b with a bore 24e in the cap 24.

The operating member 24c which is formed integrally with the cap 24, as shown in Fig. 10, has an inclined face 24d and is adapted to enter between the positioning member 25 and the holding member 26 by means of forward screwing of the adjustment screw bolt 9.

Accordingly, when the screw bolt 9 screws forwardly axially to move the cap 24 and enter the operating member 24c between the members 25 and 26, the inclined face 24d resiliently presses radially against the holding member 26 whereby the engaging members 6 are unable to engage the engagement portions 25a so as to lead to deactuation of the positioning mechanism, at which point the cylinder 24a of the cap 24 urges the friction plate 8 to actuate the friction mechanism.

Hence, in this embodiment, the adjustment screw bolt 9 only is operated to enable simple, quick and alternate selection of the friction mechanism and the positioning mechanism.

The sixth embodiment, as shown in Figs. 12 through 14, is a modified form of the fifth embodiment and effects positioning of the control lever 3 axially thereof by means of the positioning mechanism in the same way as in the fourth embodiment and also can alternately switch the friction and positioning mechanisms by operating the adjustment screw bolt 9 in the same way as in the fifth embodiment.

A positioning member 27 in the sixth embodiment is formed in a cylinder of not-round bore, mounted axially movably though non-rotatably on the non-circular section shaft portion 2c of the pivot shaft 2, has towards its axially outer end a flange 27b extending radially outwardly with a plurality of generally ratchet-tooth-shaped engagement portions 27a on the lower surface of the flange 27b, and a snap ring 28 is supported around the axial end of the positioning member 27 and opposite the flange 27b. In addition, the control lever 3 in this embodiment is mounted rotatably on the positioning member 27.

An engaging member 29 of the positioning mechanism is interposed rotatably and axially movably between the flange 27b and the snap ring 28, and comprises an annular member 29a, a plurality of guide segments 29b disposed intermittently at the outer periphery of the annular member 29a and in axially movable splined-connection engagement with the inner surface of the recess 3d of the lever 3, and engaging projections 29c provided at the upper surface of annular member 29a opposite the flange 27b and engagable with or disengagable from each engagement portion 27a of the positioning member 27.

The engaging member 29 is mounted on the positioning member 27 so as to allow the projections 29c to engage the engagement portions 27a, and a plurality of leaf springs 30 arranged for biasing the engaging member 29 in a direction for engagement with the positioning member 27 are interposed between the annular member 29a and the snap ring 28, to constitute the positioning mechanism. Incidentally, the positioning member 27, engaging member 29 and leaf springs 30, can be assembled as a unit by mounting the snap ring 28. The assembled positioning mechanism is mounted on the non-circular shaft portion 2c of thr pivot shaft 2, the snap ring 28 is placed on the receiving surface 3b of the recess 3d of the lever 3, and the guide segments 29b are mounted on the inner surface of the recess 3d.

The operating mechanism uses a cap 31 operable in association with the adjustment screw bolt 9 similarly to the fifth embodiment, the cap 31 having a non-circular section cylinder 31a non-rotatably mountable in the non-circular bore of the positioning member 27 and an abutment portion 31c projects from the inner surface of a lid portion 31b of the cap 31.

A washer 32 in the form of a resiliently deformable plate is placed on the upper end surface of the positioning member 27 so that the adjustment screw bolt 9 is rotated to allow the cap 31 to move forwardly to bias the washer 32 and the guide segments 29b therewith thereby to move the engaging member 29 to disengage it from the engagement portion 27a, or the screw bolt 9 screws backwardly and the leaf springs 30 bias the engaging member 29 to return it into engagement with the engagement portions 27a.

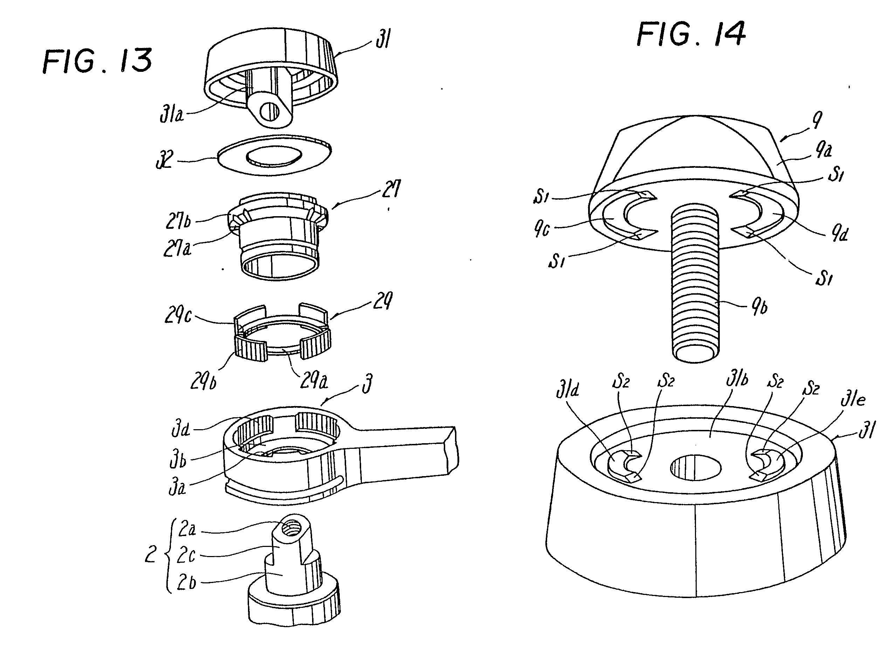

The relation between the adjusting screw bolt 9 and the cap 31 is shown in more detail in Fig. 14. The head of the adjustment screw bolt 9 is provided at its rear surface with a pair of recesses 9c and 9d each in a circular arc and inclined faces $S_1$ are provided at both lengthwise ends of the recesses 9c and 9d. The cap 31 is provided at the surface of a lid 31b with a pair of projections 31d and 31e each in a circular arc corresponding to the recess 9c or 9d, the projections 31d and 31e having at both lengthwise ends thereof respective inclined faces $S_2$.

When the adjustment screw bolt 9 is screwed forwardly into the pivot shaft 2, the recesses 9c and 9d are engaged respective projections 31d and 31e, so that the positioning mechanism operates at the position where the fitted screw bolt 9 is operated. Thus, in this operating position, since the recesses 9c and 9d are engaged with the projections 31d and 31e, the screw bolt 9 is firmly secured against loosening, operation of the adjustment screw bolt 9 providing a click-stop action, and the actuated and de-actuated positions of the positioning mechanism being clearly differentiated from each other.

When the screw bolt 9 is screwed further forward, the cap 31 presses the washer 32 with the abutment portion 31c to disconnect the engaging member 29 from the positioning member 27 as described above and also the end face of each guide segment 29b contacts the receiving face 3b in the recess 3d, thereby applying a desired rotational resistance to the lever 3.

Hence, in this embodiment also, only the adjustment screw bolt 9 is operated to enable the friction and positioning mechanisms to be selected simply, quickly and alternately.

Now, each generally ratchet tooth-shaped engagement portion 27a of the positioning member 27 preferably has a shallow in an angle of inclination so as to reduce the resistance to disengagement of the engaging member 29 when the control lever 3 is rotated in the direction against the biasing force of the derailleur return spring relative to that encountered when it is rotated in the reverse direction. Thus, the operating forces in both operating directions can be equalized in magnitude.

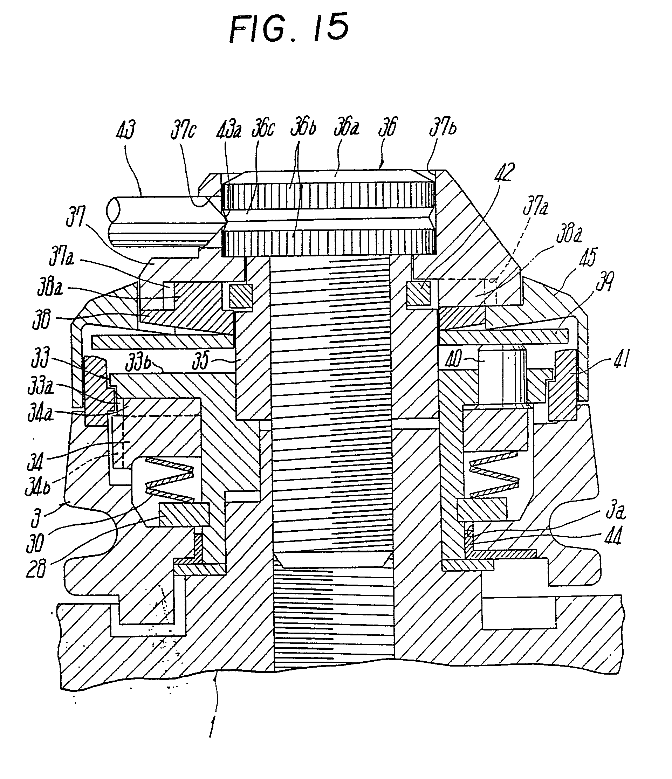

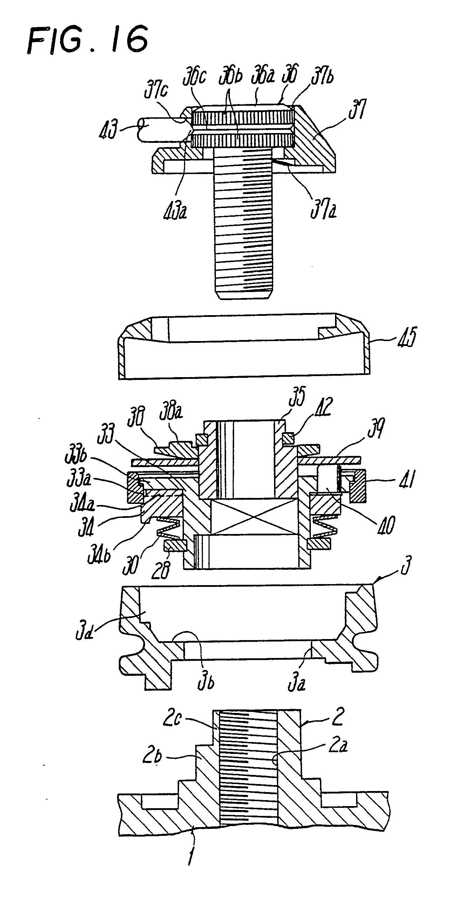

The embodiment shown in Figs. 15 to 25 is a modified form of the sixth embodiment and does not use an adjustment screw bolt but instead an operating member is rotatably mounted on the screw bolt and a cam body is used for selection of each mechanism.

The positioning member 33 in the seventh embodiment is tubular and has a flange 33b provided with engagement portions 33a. An annular engaging member 34 is provided at the annular portion with engaging projections 34a engagable with respective engagement portions 33a of the positioning member 33 and at the outer peripheral surface with splines 34b for splined connection to the inner surface of a recess in the control lever 3, the positioning member 33 and engaging member 34, similarly to the sixth embodiment, are assembled into a unit by means of leaf springs 30 secured by a snap ring 28.

Also, a fixing bushing 35 is applied to the positioning member 33 and a fixing screw member 36 further described hereinbelow screw-threadedly engages the threaded bore 2a in the lever shaft 2, thereby fixing the positioning member 33 to the base member 1, the screw member 36 also being screwably fixed thereto.

The bushing 35 has at its outer periphery a circular peripheral portion and a non-circular peripheral portion, the circular peripheral portion rotatably mounting an operating member 37 having a first cam face 37a, the non-circular peripheral portion non-rotatably but axially movably mounting a cam body 38 having a second cam face 38a and a washer 39 in the form of a resiliently deformable plate. At the flange 33b of the positioning member 33 there is provided a release pin 40 projecting through the flange 33b and abutting at one end against the washer 39 and at its other end against the engaging member 34, the cam body 38 and washer 39 being retained resiliently by the springs 30 against axial displacement in one direction. In addition, an abutment member 41 for contacting the washer 39 and applying a rotational resistance to the lever 3, is mounted on said lever 3 rotatably not relative thereto. The washer 39 serves as a friction plate and constitutes together with the abutment member 41 a friction mechanism. Alternatively, the abutment member 41 may be formed integrally with the lever 3.

Also, the bushing 35 is attached with a snap ring 42 and holds together with the snap ring 28 mounted on the positioning member 33, the various parts of the positioning mechanism together as a unit.

The fixing screw member 36 is provided at the outer periphery of the head 36a with circumferentially disposed splines 36b extending axially of the screw member 36 and with an annular groove 36c traversing the splines 36b, the head 36a being housed in a recess 37b at the top of the operating member 37 so as to be rotatable relative thereto.

At the top of the operating member 37 are provided two lateral bores 37c extending through the top and communicating with the recess 37b, and a handle 43 of generally 'C'-shaped form is fitted at both ends into the bores 37c and provided at both ends with engaging projections 43a selectively engagable with the splines 36b or the annular groove 36c, whereby the projections 43a engage with the splines 36b to restrain the operating member 37 from rotation relative to the fixing screw member 36, or engage with the annular groove 36c to allow the operating member 37 to rotate relative thereto.

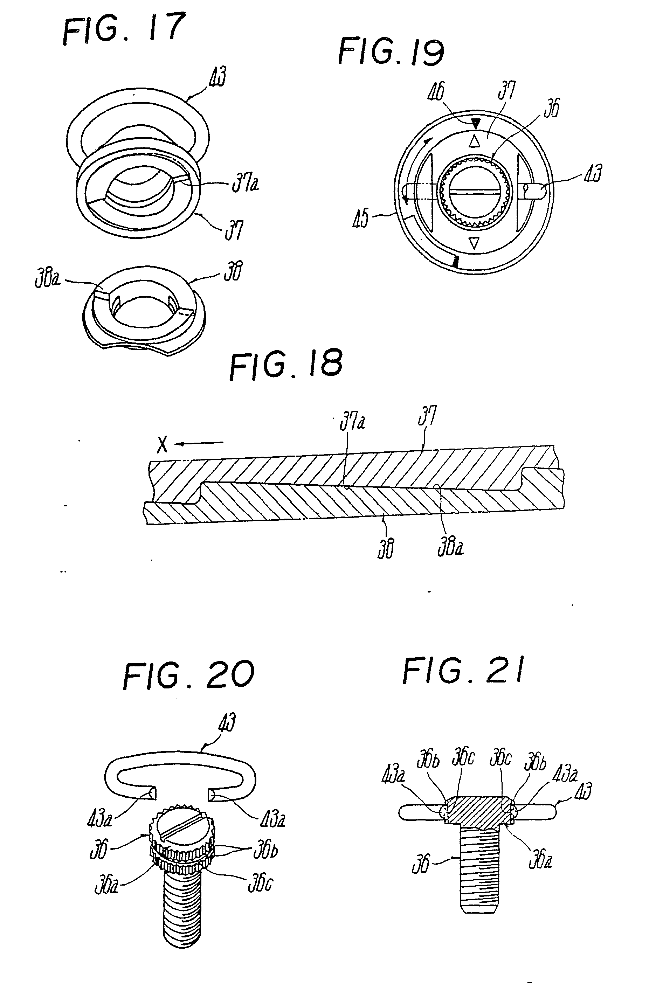

Incidentally, as shown in Fig. 15, there are provided a generally ring-shaped flanged washer 44 for reinforcing the shaft bore 3a, and a cap 45 and suitable indicia 46 are provided on the outer surface of the cap 45 and operating member 37 respectively, as shown in Fig. 19, for displaying the operating position of the operating member 37.

In the abovementioned form of construction, the handle 43 operates to rotate the operating member 37 thereby to selectively actuate the positioning mechanism and friction mechanism and the operating condition thereof is reliably held by engagement of the handle 43 with the head 36a of the fixing screw member 36.

Referring to Fig. 15, the positioning mechanism is shown in its operating condition. When the control lever 3 is intended to be switched from the above condition to the operating condition of friction mechanism, the handle 43 of the former is raised with respect to the fixing screw member 36 and engages at the engaging projections 43a with the annular groove 36c as shown in Fig. 15, thereby permitting rotation of the operating member 37. In this condition, the operating member 37 is rotated in the reverse direction (in the direction of the arrow in Fig. 18) to that for tightening of the fixing screw member 36, whereby first and second cam faces 37a and 38a shift each other and successively from the engaging position shown in Fig. 18 and the cam body 38 shifts in the disengaging direction from the operating member 37. Such movement of the cam body 38 is transmitted to the engaging member 34 through the washer 39 and release pin 40, so that the engaging member 34 moves against the springs 30 and disengages from the engagement portion 33a of the positioning member 33, thereby de-actuating the positioning mechanism. The displacement of the cam body 38 presses the washer 39 at the inner surface of its peripheral portion against the contact member 41 which is rotatable together with the control lever 3, so that a predetermined frictional resistance is applied between the contact member 41 and the washer 39 for actuation of the friction mechanism. Hence, the lever 3 is operable by actuating the friction mechanism. The handle 43 then engages at its engaging projections 43a the splines 36b, thereby ensuring that the operating member 37 is held in its operating position.

Where the friction mechanism in operation is switched to the positioning mechanism in operation, the engaging projections 43a engage the annular groove 36c at the fixing screw 36 and the operating member 37 is rotated in the direction of forward screwing of the screw 36, so that the first and second cam faces 37a and 38a re-engage as shown in Fig. 18. Hence, the cam body 38 moves toward the operating member 37 and the engaging member 34 engages at the portions 34a with the engagement portion 33a, thereby putting the positioning mechanism in its operating mode i.e. actuating it.

Alternatively, the cam body 38 is not used and the operating member 37 may screw with the outer periphery of fixing bushing 35 so as to screw forwardly or backwardly to selectively switch the positioning and the friction mechanisms. Such a construction is not specifically illustrated.

Also, the lever shaft 2 may extend and the bushing 35 may project therethrough so that, for example, a nut may screw with, or a snap ring be mounted on the extension of lever shaft 2.

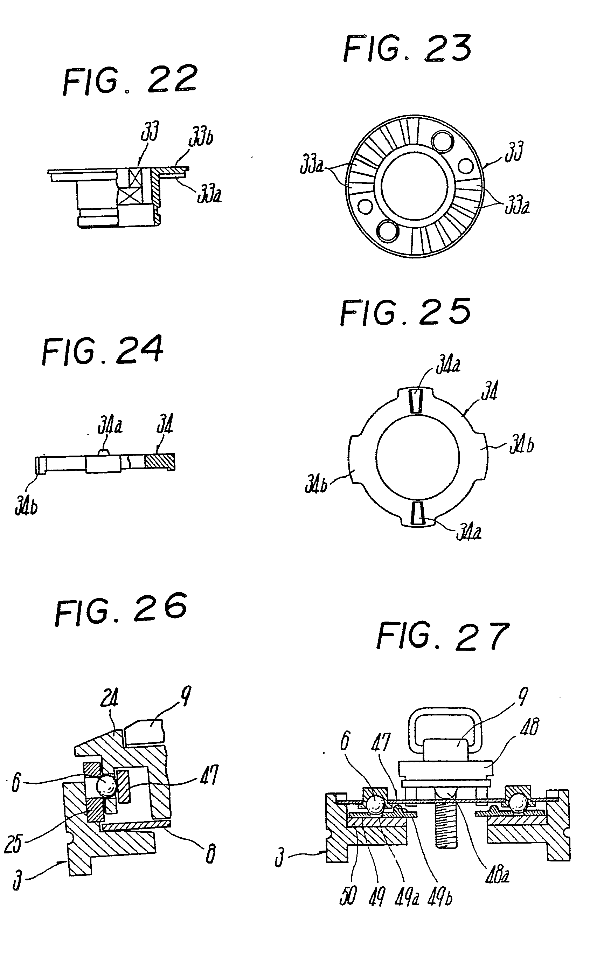

In another modification of the fifth embodiment, the operating member 24c of the cap 24, as shown in Fig. 26, extends to serve as a holding member for holding the engaging members 6, and a resiliently deformable tube 47 is used to bias the engaging members 6 towards the positioning member 25. Alternatively, a holding member 47 holding the engaging members 6 may, as shown in Fig. 27, be formed as a resiliently deformable plate and engage with the lever 3 so as to be non-rotatable relative thereto. A biasing member 48 in association with screwing movement of the adjustment screw member 9 may be provided and have a projection 48a in contact with the holding member 47. A positioning member 49 may be generally disc-shaped, supported non-rotatably but axially movably only on the lever shaft 2 or base member 1, and provided with receiving members 49b, so that the screw member 9 may screw forward to resiliently displace the holding member 47 to disengage the engaging members 6 from the engagement portions 49a and the positioning member 49 is brought into press-contact with the lever 3 through the friction plate 50, thereby applying to the lever 3 the desired rotational resistance.

## Claims

1. A speed-change operating device suitable for use with a cycle derailleur having a return spring, which device comprises a base member (1) having a pivot shaft (2), a control lever (3) mounted rotatably on said pivot shaft (2) for actuating said derailleur, said speed change operating device having a friction mechanism (8) for subjecting said lever (3) to a rotational resistance against the biasing force of said derailleur return spring, a positioning mechanism for said lever (3), which mechanism is provided with a positioning member (5; 21; 25) having a plurality of engagement portions (5a) for setting the speed change stages of said derailleur and an engaging member (6) engagable with at least one of said engagement portions (5a) characterised in that said device further comprises an operating mechanism including engagement control means (12; 23; 24) movable between a first mode in which there is operative engagement between said positioning member and said engaging member (6) and a second mode in which the engagement is interrupted and becomes non-operative, said friction mechanism (8) operating to maintain the control lever (3) in a selected speed change position during disengagement of the positioning member (5; 21; 25) in said second mode.

2. A device according to claim 1, wherein the engagement control means is a clutch means (12) acting to bring about selection between said first mode and said second mode, said friction mechanism (8) being adapted to operate to maintain said control lever (3) in a selected speed change position in response to selection of said second mode by operation of the clutch member.

3. A device according to claim 1 or claim 2, characterised in that said control lever (3) has a boss having a generally circular recess (3d) said positioning member (5) being generally circular so as to fit into said generally circular recess (3d) and having an engaging groove (5b) engagable with said clutch member (12), said clutch member (12) being supported on said control lever (3) so as to be movable to an engaging position where said clutch member (12) enters said engaging groove (5b) on said positioning member (5) and a disengaging position where said clutch member (12) disengages from said engaging groove (5b).

4. A device according to claim 2, characterised in that said engaging member is provided with a generally tubular support member (13) for holding said engaging member (6), said support member (13) having an engaging groove engagable (13e) with said clutch member (12), said clutch member (12) being mounted on said control lever (3) so as to be movable between an engaging position where said clutch member (12) enters said engaging groove (13e) of said support member (13) and a disengaging position where said clutch member (12) disengages from said engaging groove (13e).

5. A device according to claim 1 characterised in that the engagement control means is a displacing member (23; 24) acting to bring about selection between said first mode and said second mode, the displacing member being supported upon the pivot shaft (2) and adapted to bring about relative displacement between said positioning member (21, 25) and said engaging members (6), displacement of one of said members occurring upon operation of said displacing member to select said second mode.

6. A device according to claim 5, characterised in that said displacing member has control bores for receiving therein a plurality of said engaging member (6) and displacing the latter between an engaging position thereof with respect to said engagement portions (5a) of said positioning member (5) and a disengaging position of the same, and is supported rotatably on said positioning member (5).

7. A device according to claim 5, characterised in that said displacing member has a releasing member which enters between said positioning member and said engaging member to disengage said engaging members from said engagement portions of said positioning member, and is axially movably supported on said pivot shaft (2).

8. A device according to any of claims 1 to 7, wherein is provided an adjustment screw member (9) screw-threadedly engaging said pivot shaft (2) for adjustment of rotational resistance applied by said friction mechanism and a cap (7) supported non-rotatably with respect to said base member (1) and axially movably only relative to said pivot shaft (2) so as to move axially thereof in association with screwing movement of said screw member (9), said control lever (3) having a boss, said positioning mechanism being interposed between said cap (7) and said boss, so that said adjustment screw member (9) can be screwed in or out for selection of a respective one of said friction mechanism and positioning mechanism.

9. A device according to claim 8, wherein said positioning member (5) of said positioning mechanism comprises a generally tubular member having a plurality of engagement portions (5a) extending radially of said pivot shaft (2), said engaging member (6) is provided with a generally tubular holding member (11) for holding said engaging members (6) so that one of said positioning member (5) and holding member (11) is resiliently radially displacable and said cap (7) has a release member which enters between said positioning member (5) and said holding member (11) and resiliently displaces one of said positioning member (5) and holding member (11) thereby to disengage said engaging member (6) from the respective engagement portion (5a).

10. A device according to claim 8, wherein said positioning member (5) of said positioning mechanism has a plurality of engagement portions (5a) extending axially of said pivot shaft (2), said engaging member (6) is disposed opposite said engagement portions (5a) in the axial direction with respect to said pivot shaft (2) and one of said positioning member (5) and engaging member (6) is displacable axially of said pivot shaft (2), said speed change operating device having a biasing means (19) formed and arranged so as to be movable with said adjustment screw member (9) upon screwing thereof for disengaging said engaging member (6) from said engaging portions (5a).

11. A device according to claim 10, wherein said biasing means (19) is provided at said cap (7).

12. A device according to claim 10, providing between said cap (7) and said adjustment screw member (9) a holding means for holding said cap (7) in position with respect to said adjustment screw member (9).

13. A device according to claim 1, wherein said positioning member (33) of said positioning mechanism has a plurality of engagement portions (33a) extending axially of said pivot shaft (2), said engaging member (34) being disposed opposite said engagement portions (33a) in the axial direction with respect to said pivot shaft (2), one of said positioning member (33) and engaging member (34) being displacable axially of said pivot shaft (2), said operating mechanism being provided with an operating means (37) rotatably movable around the axis of said pivot shaft (2) for selecting one of said friction mechanism and positioning mechanism.

14. A device according to claim 13, wherein is provided a friction plate (41) displacable axially by rotatably operating said operating means (37) and a release pin (40) which transmits the axial displacement of said friction plate (41) to one of said positioning member (33) and engaging member (34) axially displacable in said positioning mechanism, for disengaging said engaging member (34) from said engagement portions (33a).

15. A device according to claim 13, wherein said operating means is provided with an operating member (37) having a first cam face (37a) and a cam body (38) having a second cam face (38a).

16. A device according to claim 13, wherein is provided a fixing means (36) for fixing said positioning member (33) to said base member (1), a coupling means (34b) for coupling said engaging member (34) to said control lever (3) so as to be non-rotatable relative thereto but axially movable only, and spring means (30) for biasing said engaging member (34) against said positioning member (33).

17. A device according to claim 13, wherein is provided a holding means (36, 43) for holding said operating member (37) in actuating positions for said positioning mechanism and said friction mechanism.

## Patentansprüche

1. Gangschaltungsbetätigungsvorrichtung, geeignet zur Verwendung mit einer Fahrrad-Kettenschaltung mit einer Rückstellfeder, wobei die Vorrichtung ein Basiselement (1) mit einem Drehzapfen (2), einen Steuerhebel (3), der drehbar auf dem Drehzapfen (2) zum Betätigen der Kettenschaltung angeordnet ist, eine Reibungseinrichtung (8), um den Hebel (3) einem Drehwiderstand zu unterwerfen, der der Vorspannkraft der Kettenschaltung-Rückstellfeder entgegenwirkt, und eine Positioniereinrichtung für den Hebel (3) aufweist, die mit einem Positionierelement (5; 21; 25) versehen ist, das eine Anzahl von Eingriffsabschnitten (5a) zum Einstellen der Gangwechselstufen der Kettenschaltung und ein Eingriffselement (6) aufweist, das mit wenigstens einem der Eingriffsabschnitte (5a) in Eingriff bringbar ist, dadurch gekennzeichnet, daß die Vorrichtung weiterhin eine Betätigungseinrichtung aufweist, die ein Eingriffssteuermittel (12; 23; 24) einschließt, das bewegbar ist zwischen einem ersten Modus, in dem wirksamer Eingriff zwischen dem Positionierelement und dem Eingriffselement (6) besteht, und einem zweiten Modus, in dem der Eingriff unterbrochen und nicht wirksam ist, wobei die Reibungseinrichtung (8) den Steuerhebel (3) in einer gewählten Gangwechselstellung während des Nichteingreifens des Positionierelementes (5; 21; 25) im zweiten Modus hält.

2. Vorrichtung nach Anspruch 1, dadurch gekennzeichnet, daß das Eingriffssteuermittel ein Kupplungsmittel (12) ist, das eine Auswahl zwischen dem ersten Modus und dem zweiten Modus ermöglicht, wobei die Reibungseinrichtung (8) den Steuerhebel (3) in einer gewählten Gangwechselstellung hält, wenn durch Betätigen des Kupplungselementes der zweite Modus gewählt ist.

3. Vorrichtung nach Anspruch 1 oder 2, dadurch gekennzeichnet, daß der Steuerhebel (3) eine Nabe hat, die eine allgemein kreisförmige Vertiefung (3d) aufweist, wobei das Positionierelement (5) allgemein derart kreisförmig ist, um in der allgemein kreisförmigen Vertiefung (3d) einpaßbar zu sein, und eine Eingriffsnut (5b) aufweist, die mit dem Kupplungselement (12) in Eingriff bringbar ist, das auf dem Steuerhebel (3) derart gehalten ist, um bewegbar in eine Eingriffsposition, wo das Kupplungselement (12) in die Eingriffsnut (5b) auf dem Positionierungselement (5) eingreift, und in eine Nichteingriffsposition zu sein, wo das Kupplungselement (12) außer Eingriff ist mit der Eingriffsnut (5b).

4. Vorrichtung nach Anspruch 2, dadurch gekennzeichnet, daß das Eingriffselement mit einem allgemein rohrförmigen Trägerelement (13) zum Halten des Eingriffselementes (6) versehen ist, wobei das Trägerelement (13) eine Eingriffsnut (13e) aufweist, die mit dem Kupplungselement (12) in Eingriff bringbar ist, das auf dem Steuerhebel (3) derart angeordnet ist, um bewegbar zwischen einer Eingriffsposition, wo das Kupplungselement (12) in die Eingriffsnut (13e) des Trägerelementes (13) eingreift, und einer Nichteingriffsposition zu sein, wo das Kupplungselement (12) außer Eingriff ist mit der Eingriffsnut (13e).

5. Vorrichtung nach Anspruch 1, dadurch gekennzeichnet, daß das Eingriffssteuermittel ein Verlagerungselement (23; 24) ist, das bewirkt, eine Auswahl zwischen dem ersten Modus und dem zweiten Modus zu ermöglichen, wobei das Verlagerungselement auf dem Drehzapfen (2) getragen ist und eine relative Verlagerung zwischen dem Positionierelement (21, 25) und dem Eingriffselement (6) ermöglicht, wobei die Verlagerung eines der Elemente infolge der Betätigung des Verlagerungselementes auftritt, um den zweiten Modus zu wählen.

6. Vorrichtung nach Anspruch 5, dadurch gekennzeichnet, daß das Verlagerungselement Steuerbohrungen aufweist zum Aufnehmen einer Anzahl von Eingriffselementen (6) und zum Verlagern letzterer zwischen einer ihrer Eingriffspositionen in bezug auf die Eingriffsabschnitte (5a) des Positionierelementes (5) und einem Nichteingriffsabschnitt desselben, und daß das Verlagerungselement drehbar auf dem Positionierelement (5) gehalten wird.

7. Vorrichtung nach Anspruch 5, dadurch gekennzeichnet, daß das Verlagerungselement ein Freigabeelement aufweist, das zwischen dem Positionierelement und dem Eingriffselement eingreift, um die Eingriffselemente von den Eingriffsabschnitten zu lösen, und das axial bewegbar auf dem Drehzapfen (2) gehalten ist.

8. Vorrichtung nach einem der Ansprüche 1—7, dadurch gekennzeichnet, daß ein im Gewindeeingriff mit dem Drehzapfen (2) stehendes Einstellschraubenelement (9) zum Einstellen des Drehwiderstandes, der durch die Reibungseinrichtung aufgebracht wird, und eine Kappe (7) vorgesehen sind, die nicht drehbar auf dem Basiselement (1) und axial bewegbar nur in Bezug zum Drehzapfen (2) gehalten ist, um sich axial in Übereinstimmung mit der Schraubenbewegung des Schraubenelementes (9) zu bewegen, daß der Steuerhebel (3) eine Nabe aufweist, und daß die Positioniereinrichtung zwischen der Abdeckung (7) und der Nabe angeordnet ist, so daß das Einstellschraubenelement (9) zum Austausch einer entsprechenden Reibungseinrichtung und einer Positioniereinrichtung herein- oder herausgeschraubt werden kann.

9. Vorrichtung nach Anspruch 8, dadurch gekennzeichnet, daß das Positionierelement (5) der Positioniereinrichtung im allgemeinen ein rohrförmiges Element mit einer Anzahl von Eingriffsabschnitten (5a) aufweist, die sich radial vom Drehzapfen (2) erstrecken, daß das Eingriffselement (6) mit einem im allgemeinen rohrförmigen Halteelement (11) zum Halten des Eingriffselementes (6) versehen ist, so daß eines der Positionierelemente (5) und Halteelemente (11) federelastisch radial verschiebbar ist und die Kappe (7) ein Freigabeelement aufweist, das zwischen das Positionierelement (5) und das Halteelement (11) eingreift und federelastisch eines der Positionierelemente (5) und Halteelemente (11) verschiebt, wobei das Eingriffselement (6) außer Eingriff vom entsprechenden Eingriffsabschnitt (5a) kommt.

10. Vorrichtung nach Anspruch 8, dadurch gekennzeichnet, daß das Positionierelement (5) der Positioniereinrichtung eine Anzahl von Eingriffsabschnitten (5a) aufweist, die sich axial vom Drehzapfen (2) erstrecken, wobei das Eingriffselement (6) gegenüber den Eingriffsabschnitten (5a) in axialer Richtung in bezug auf den Drehzapfen (2) und eines der Positionierelemente (5) gegenüberliegend angeordnet ist, und das Eingriffselemente (6) axial verschiebbar vom Drehzapfen (2) ist, die Gangwechselbetätigungsvorrichtung ein Vorspannmittel (19) aufweist, das dazu ausgebildet und vorgesehen ist, um mit dem Einstellschraubenelement (9) beim Verschrauben mit diesem zum Außereingriffbringen des Eingriffselementes (6) von den Eingriffsabschnitten (5a) bewegbar zu sein.

11. Vorrichtung nach Anspruch 10, dadurch gekennzeichnet, daß das Vorspannmittel (19) an der Kappe (7) angeordnet ist.

12. Vorrichtung nach Anspruch 10, dadurch gekennzeichnet, daß die zwischen der Kappe (7) und dem Einstellschraubenelement (9) ein Halteelement zum Halten der Kappe (7) in einer entsprechenden Stellung zum Einstellschraubenelement (9) angeordnet ist.

13. Vorrichtung nach Anspruch 1, dadurch gekennzeichnet, daß das Positionierelement (33) der Positioniereinrichtung eine Anzahl von Eingriffsabschnitten (33a) aufweist, die sich axial vom Drehzapfen (2) erstrecken, wobei das Eingriffselement (34) entgegengesetzt den Eingriffsabschnitten (33) in axialer Richtung in bezug auf den Drehzapfen (2) verschoben ist, wobei eines der Positionierelemente (33) und der Eingriffselemente (34) axial vom Drehzapfen (2) verschiebbar ist und die Betätigungseinrichtung mit einem Betätigungsmittel (37) versehen ist, das um die Achse des Drehzapfens (2) zum Auswählen einer der Reibungs- und Positioniereinrichtungen drehbeweglich ist.

14. Vorrichtung nach Anspruch 13, dadurch gekennzeichnet, daß eine Reibungsplatte (41) durch Drehen des Betätigungsmittels (37) axial verschiebbar ist und ein Freigabestift (40) vorgesehen ist, der die axiale Verschiebung der Reibungsplatte (41) zu einem der Positionierelemente (33) überträgt, und daß das Eingriffselement (34) axial verschiebbar in der Positioniereinrichtung ist, damit das Eingriffselement (34) von den Eingriffsabschnitten (33a) außer Eingriff gelangt.

15. Vorrichtung nach Anspruch 13, dadurch gekennzeichnet, daß das Betätigungsmittel mit einem Betätigungselement (37) versehen ist, das eine erste Nockenfläche (37a) und einen Nockenkörper (38) aufweist, der eine zweite Nockenfläche (38a) aufweist.

16. Vorrichtung nach Anspruch 13, dadurch gekennzeichnet, daß ein Befestigungsmittel (36) zum Befestigen des Positionierelementes (33) am Basiselement (1), ein Kupplungsmittel (34b) zum Kuppeln des Eingriffselementes (34) mit dem Steuerhebel (3), so daß dieser nicht drehbar in Bezug dazu, aber lediglich axial bewegbar ist, und Federmittel (30) zum Vorspannen des Eingriffselementes (34) gegen das Positionierelement (33) vorgesehen sind.

17. Vorrichtung nach Anspruch 13, dadurch gekennzeichnet, daß ein Haltemittel (36; 43) zum Halten des Betätigungselementes (37) in Berührungspositionen für die Positioniereinrichtung und die Reibungseinrichtung vorgesehen ist.

**Revendications**

1. Dispositif de commande de changement de vitesse utilisable avec un dérailleur de bicyclette à ressort de rappel, ce dispositif comprenant une pièce de base (1) qui comporte un axe de pivot (2), un levier de commande (3) monté de façon tournante sur ledit axe de pivot (2) pour manoeuvrer ledit dérailleur, ledit dispositif de commande de changement de vitesse comportant un mécanisme à friction (8) pour soumettre ledit levier (3) à une résistance de rotation s'opposant à la force de rappel dudit ressort de rappel de dérailleur, un mécanisme de positionnement dudit levier (3), ce mécanisme étant pourvu d'un élément de positionnement (5; 21; 25) qui comporte une pluralité de parties d'enclenchement (5a) pour établir les étages de changement de vitesse dudit dérailleur et un élément d'enclenchement (6) qui peut venir en prise avec au moins une desdites parties d'enclenchement (5a), caractérisé en ce que ledit dispositif comprend en outre un mécanisme de manoeuvre comportant des moyens de commande d'enclenchement (12; 23; 24) mobiles entre un premier mode, dans lequel il y a un engagement actif entre ledit élément de positionnement et ledit élément d'enclenchement (6), et un deuxième mode dans lequel l'engagement est interrompu et devient inopérant, ledit mécanisme à friction (8) agissant pour maintenir le levier de commande (3) dans une position choisie de changement de vitesse pendant le dégagement de l'élément de positionnement (5; 21; 25) dans ledit deuxième mode.

2. Dispositif suivant la revendication 1, dans lequel les moyens de commande d'enclenchement sont constitués par un organe d'embrayage (12) servant à effectuer la sélection entre ledit premier mode et ledit deuxième mode, ledit mécanisme à friction (8) étant prévu pour fonctionner de manière à maintenir ledit levier de commande (3) dans une position choisie de changement de vitesse en réponse à la sélection dudit deuxième mode par manoeuvre de l'organe d'embrayage.

3. Dispositif suivant la revendication 1 ou la revendication 2, caractérisé en ce que ledit levier de commande (3) possède un bossage comportant un logement sensiblement circulaire (3d), ledit élément de positionnement (5) étant sensiblement circulaire de manière à s'ajuster dans ledit logement sensiblement circulaire (3d) et comportant une rainure d'enclenchement (5b) qui peut s'accoupler avec ledit organe d'embrayage (12), ledit organe d'embrayage (12) étant supporté sur ledit levier de commande (3) de façon à être déplaçable à une position d'enclenchement dans laquelle ledit organe d'embrayage (12) pénètre dans ladite rainure d'enclenchement (5b)

12

dudit élément de positionnement (5) et à une position de dégagement dans laquelle ledit organe d'embrayage (12) est dégagé de ladite rainure d'enclenchement (5b).

4. Dispositif suivant la revendication 2, caractérisé en ce que ledit élément d'enclenchement est pourvu d'un élément support sensiblement tubulaire (13) pour tenir ledit élément d'enclenchement (6), ledit élément support (13) comportant une rainure d'enclenchement (13e) qui peut s'enclencher avec ledit organe d'embrayage (12), ledit organe d'embrayage (12) étant monté sur ledit levier de commande (3) de manière à être déplaçable entre une position d'enclenchement, dans laquelle ledit organe d'embrayage (12) pénètre dans ladite rainure d'enclenchement (13e) dudit élément support (13), et une position de dégagement dans laquelle ledit organe d'embrayage (12) est dégagé de ladite rainure d'enclenment (13e).

5. Dispositif suivant la revendication 1, caractérisé en ce que les moyens de commande d'enclenchement sont constitués par un élément de déplacement (23, 24) qui agit pour effectuer la sélection entre ledit premier mode et ledit deuxième mode, l'élément de déplacement étant supporté sur l'axe de pivot (2) et prévu pour engendrer un déplacement relatif entre ledit élément de positionnement (21, 25) et lesdits éléments d'enclenchement (6), le déplacement d'un desdits éléments se produisant lors de la manoeuvre dudit élément de déplacement pour la sélection dudit deuxième mode.

6. Dispositif suivant la revendication 5, caractérisé en ce que ledit élément de déplacement comporte des trous de commande pour recevoir dans ces derniers une pluralité de dits éléments d'enclenchement (6) et pour déplacer ceux-ci entre leur position d'enclenchement, par rapport auxdites parties d'enclenchement (5a) dudit élément de positionnement (5), et leur position de dégagement, et il est supporté de façon tournante sur ledit élément de positionnement (5).

7. Dispositif suivant la revendication 5, caractérisé en ce que ledit élément de déplacement comporte un élément de libération qui pénètre entre ledit élément de positionnement et ledit élément d'enclenchement pour dégager lesdits éléments d'enclenchement des dites parties d'enclenchement dudit élément de positionnement, et il est supporté de façon axialement mobile sur ledit axe de pivot (2).

8. Dispositif suivant l'une quelconque des revendications 1 à 7, dans lequel il est prévu une vis de réglage (9) qui se visse dans ledit axe de pivot (2) pour le réglage de la résistance de rotation exercée par ledit mécanisme à friction, et un chapeau (7) supporté de façon non tournante par rapport à ladite pièce de base (1) et déplaçable seulement axialement par rapport audit axe de pivot (2) de façon à se déplacer dans le sens axial de celui-ci en association avec le mouvement de vissage de ladite vis (9), ledit levier de commande (3) possédant un bossage, ledit mécanisme de positionnement étant interposé entre ledit chapeau (7) et ledit bossage de sorte que ladite vis de réglage (9) peut être vissée ou dévissée pour la sélection d'un mécanisme respectif parmi ledit mécanisme de friction et ledit mécanisme de positionnement.

9. Dispositif suivant la revendication 8, dans lequel ledit élément de positionnement (5) dudit mécanisme de positionnement comprend un élément sensiblement tubulaire comportant une pluralité de parties d'enclenchement (5a) s'étendant dans la direction radiale dudit axe de pivot (2), ledit élément d'enclenchement (6) est pourvu d'un élément de retenue sensiblement tubulaire (11) pour tenir lesdits éléments d'enclenchement (6) de sorte qu'un élément parmi ledit élément de positionnement (5) et ledit élément de retenue (11) est élastiquement déplaçable radialement, et ledit chapeau (7) comporte un élément de libération qui pénètre entre ledit élément de positionnement (5) et ledit élément de retenue (11) et déplace élastiquement l'un desdits éléments de positionnement (5) et de retenue (11) de façon à dégager ledit élément d'enclenchement (6) de la partie d'enclenchement respective (5a).

10. Dispositif suivant la revendication 8, dans lequel ledit élément de positionnement (5) dudit mécanisme de positionnement comporte une pluralité de parties d'enclenchement (5a) qui s'étendent dans la direction axiale dudit axe de pivot (2), ledit élément d'enclenchement (6) est disposé en face desdites parties d'enclenchement (5a) dans la direction axiale par rapport audit axe de pivot (2), et l'un des dits éléments de positionnement (5) et d'enclenchement (6) est déplaçable dans la direction axiale dudit axe de pivot (2), ledit dispositif de commande de changement de vitesse comportant un organe de poussée (19) formé et disposé de manière à se déplacer avec ladite vis de réglage (9) lors de son vissage, pour dégager ledit élément d'enclenchement (6) desdites parties d'enclenchement (5a).

11. Dispositif suivant la revendication 10, dans lequel lesdits moyens de poussée (19) sont prévus dans ledit chapeau (7).

12. Dispositif suivant la revendication 10, comportant entre ledit chapeau (7) et ladite vis de réglage (9) un organe de retenue pour tenir le dit chapeau (7) en position par rapport à ladite vis de réglage (9).

13. Dispositif suivant la revendication 1, dans lequel ledit élément de positionnement (33) dudit mécanisme de positionnement comporte une pluralité de parties d'enclenchement (33a) s'étendant dans la direction axiale dudit axe de pivot (2), ledit élément d'enclenchement (34) étant disposé en face desdites parties d'enclenchement (33a) dans la direction axiale par rapport audit axe de pivot (2), l'un desdits éléments de positionnement (33) et d'enclenchement (34) étant déplaçable dans la direction axiale dudit axe de pivot (2), ledit mécanisme de commande comportant un organe de manoeuvre (37) déplaçable de façon tournante autour dudit axe de pivot (2) pour la sélection d'un mécanisme parmi ledit mécanisme de friction et ledit mécanisme de positionnement.

14. Dispositif suivant la revendication 13, dans lequel il est prévu une plaque de friction (41) déplaçable axialement par rotation dudit organe de manoeuvre (37) et une tige de libération (40) qui transmet le déplacement axial de ladite plaque de friction (41) à l'un dudit élément de positionnement (33) et dudit élément d'enclenchement (34) qui est axialement déplaçable dans ledit mécanisme de positionnement, pour dégager ledit élément d'enclenchement (34) desdites parties d'enclenchement (33a).

15. Dispositif suivant la revendication 13, dans lequel ledit organe de manoeuvre comporte un élément de manoeuvre (37) présentant une première face de came (37a) et un corps de came (38) présentant une deuxième face de came (38a).

16. Dispositif suivant la revendication 13, dans lequel il est prévu des moyens de fixation (36) pour fixer ledit élément de positionnement (33) à ladite pièce de base (1), des moyens de couplage (34b) pour associer ledit élément d'enclenchement (34) audit levier de commande (3) de façon à ce qu'ils ne puissent pas tourner par rapport à ce dernier mais seulement se déplacer axialement, et des moyens élastiques (30) pour pousser ledit élément d'enclenchement (34) contre ledit élément de positionnement (33).

17. Dispositif suivant la revendication 13, dans lequel il est prévu des moyens de retenue (36, 43) pour tenir ledit élément de manoeuvre (37) dans des positions d'activation dudit mécanisme de positionnement et dudit mécanisme de friction.

FIG. 1

FIG. 2

EP 0 157 983 B1

FIG. 3

FIG. 5

FIG. 4

# FIG.6

FIG. 7

FIG. 8

EP 0 157 983 B1

# FIG. 9

7c
7b
7a
7
6
22b
22a
22
6
23c
23b
23a
23d
23
21
21a
21b
8
3d
3c
3b
3
2a
2c
2b
2

# FIG. 10

FIG. 11

FIG. 12

EP 0 157 983 B1

FIG. 14

FIG. 13

# FIG. 15

# FIG. 16

FIG. 17

FIG. 19

FIG. 18

X

FIG. 20

FIG. 21

FIG. 22

FIG. 23

FIG. 24

FIG. 25

FIG. 26

FIG. 27